# EUROPÄISCHE PATENTANMELDUNG

(11) **EP 0 586 818 A1**
(43) Veröffentlichungstag der Anmeldung: **16.03.1994**
(21) Anmeldenummer: 93110652.0
(22) Anmeldetag: 03.07.1993
(51) Int. Cl.: B60S 5/00, B67D 5/02, B60T 17/22

(54) **Entleerungsvorrichtung zur Entleerung eines eine Flüssigkeit aufweisenden Behälters**

(30) Priorität: 05.09.1992 DE 9212003 U
(71) Anmelder: Schröder, Ulrich, D-52349 Düren (DE)
(72) Erfinder: Schröder, Ulrich, D-52349 Düren (DE)
(74) Vertreter: Mayer-Pohske, Joachim-Wolfgang

(57) **Zusammenfassung**

Die Erfindung betrifft eine Entleerungsvorrichtung (1) zur Entleerung eines eine Flüssigkeit aufweisenden Behälters ggfls. mit einem damit verbundenen Leitungssystem mit mindestens einem Entleerungsanschluß, vorzugsweise zur Entleerung der Bremsflüssigkeit aus einem Bremssystem. Bei der Entleerung soll eine solche Flüssigkeit nicht in die Umgebung gelangen und es sollen keine verunreinigenden Stoffe in die Flüssigkeit gelangen können. Außerdem soll schnell und kostengünstig entleert werden. Es wird daher vorgeschlagen, eine Druckstation (5) mit einem Trockenkompressor zur Erzeugung einer Druckdifferenz im zu entleerenden System sowie einen Sammelbehälter (2) vorzusehen mit einem flexiblen Entnahmeschlauch (3), an dessen freiem Ende ein Anschlußstück zur Verbindung mit dem Entleerungsanschluß des zu entleerenden Systems vorgesehen ist.

## Beschreibung

Die Erfindung betrifft eine Entleerungsvorrichtung zur Entleerung eines eine Flüssigkeit aufweisenden Behälters mit einem Leitungssystem mit mindestens einem Entleerungsanschluß, vorzugsweise zur Entleerung der Bremsflüssigkeit aus einem Bremssystem.

Entleerungsvorrichtungen der eingangs beschriebenen Art sind bekannt. Derartige Entleerungsvorrichtungen bspw. zur Entleerung der Bremsflüssigkeit aus einem Bremssystem bestehen meist lediglich aus einem Schlauch oder einer Leitung, die an die von einem Bremszylinder gelöste Leitung angeschlossen werden. Zur Entleerung des Bremssystems muß dann durch Betätigung des Hauptbremszylinders bzw. durch Betätigung des Bremspedals die Bremsflüssigkeit aus dem System gepumpt werden. Die aus den aufgesteckten Schläuchen auslaufende Flüssigkeit wird dabei in einem Behälter irgendwelcher Art aufgefangen. Diese Prozedur ist zeitaufwendig und erfordert in der Regel den Einsatz von mindestens zwei Arbeitskräften, wodurch sie relativ teuer wird. Darüber hinaus sind diese Behälter in der Regel offen. Hierdurch kann zum einen die zu entleerende Flüssigkeit in die Umgebung gelangen, zum anderen können aber Schmutzstoffe aus der Umgebung in die Flüssigkeit gelangen. Dies ist insbesondere bei Bremsflüssigkeit von großem Nachteil, da bspw. auf den Boden tropfende Bremsflüssigkeit in das Abwasser gelangen kann und damit zu Umweltbelastungen führt oder aber die Bremsflüssigkeit verunreinigende Stoffe in die Bremsflüssigkeit gelangen, die eine Wiederaufbereitung der Bremsflüssigkeit mindestens erschweren und damit verteuern.

Mit der europäischen Patentschrift Nr. 0 294 719 ist für Bremsflüssigkeit ein Sammelsystem bekannt geworden, mit einem Auffangbehälter, der dicht ist und an einen Entleerungsanschlußeines Bremszylinders angeschlossen werden kann. Ist dieser Auffangbehälter gefüllt, wird er über eine spezielle Kupplung mit einem Sammelbehälter verbunden und in diesen entleert. Hierdurch wird ein zuverlässiger Schutz der entleerten Bremsflüssigkeit erreicht. Der eingangs beschriebene zeitliche und personelle Entleerungsaufwand bleibt jedoch unberührt.

Der Erfindung liegt damit die Aufgabe zugrunde, eine Entleerungsvorrichtung der eingangs beschriebenen Art vorzuschlagen, mit der eine Flüssigkeit aus einem Behälter mit einem Leitungssystem, ohne daß die Flüssigkeit in die Umgebung gelangt oder verunreinigende Stoffe in die Flüssigkeit gelangen können, schnell und kostengünstig entleert werden kann.

Diese Aufgabe ist gelöst durch eine Druckstation mit einem Trockenkompressor zur Erzeugung einer Druckdifferenz im zu entleerenden System sowie durch einen Sammelbehälter mit einem flexiblen Entnahmeschlauch, an dessen freiem Ende ein Anschlußstück zur Verbindung mit dem Entleerungsanschluß des zu entleerenden Systems vorgesehen ist. Mit dieser Entleerungsvorrichtung ist eine sehr rasche, kostengünstige und saubere Entleerung einer Flüssigkeit aus einem Behälter und dem dazugehörigen Leitungssystem möglich. Die Entleerung des Behälters bzw. des Systems ist sowohl mit Überdruck als auch mit Unterdruck möglich.

Eine Ausgestaltung der Erfindung sieht vor, daß ein Ende des Entnahmeschlauchs eine Hälfte einer Schlauchkupplung aufweist, deren zweite Hälfte am Sammelbehältereinlaß vorgesehen ist, wobei erst nach dem Fügen der passenden Kupplungshälften ein Durchgang zum Sammelbehälter offen ist. Hierdurch wird gewährleistet, daß der Sammelbehälter nur mit der durch die Entleerungsvorrichtung entleerten Flüssigkeit gefüllt werden kann und somit keine Fremdstoffe in den Sammelbehälter gelangen.

Nach einer weiteren Ausgestaltung der Erfindung ist vorgesehen, daß der Sammelbehälter über ein 4-Wege-Ventil mit dem Trockenkompressor verbunden ist, derart, daß wahlweise die Saugseite oder die Druckseite des Trockenkompressors mit dem Sammelbehälter verbindbar ist. Durch diese Maßnahme ist es möglich, sowohl eine Überdruckentleerung als auch eine Vakuumentleerung vorzunehmen. Da bei der Vakuumentleerung ein weiterer Sammelbehälter erforderlich ist, kann dieser über die gen. Umschaltung mit dem 4-Wege-Ventil druckentleert werden in einen größeren Sammelbehälter.

Eine weitere Ausgestaltung der Erfindung sieht vor, daß ein weiterer, größerer Sammelbehälter vorgesehen ist, der mit dem Entnahmeschlauch zur Entleeerung des Sammelbehälters mit diesem verbindbar ist. Soweit der erstgenannte Sammelbehälter bei einer Vakuumentleerung benutzt wurde, kann dieser durch die angegebene Ausgestaltung in einen größeren Sammelbehälter entleert werden. Der gleiche Entnahmeschlauch, der an das zu entleerende System angeschlossen wird, um den erstgenannten Sammelbehälter zu füllen, wird nun benutzt, um den erstgenannten Sammelbehälter mit dem größeren Sammelbehälter zu verbinden, so daß der erstgenannte Sammelbehälter in den größeren Sammelbehälter entleert werden kann. Eine Entleerung kann hierbei durch die Erzeugung von Überdruck im erstgenannten Sammelbehälter erfolgen.

Eine ergänzende Ausgestaltung der Erfindung sieht vor, daß der Sammelbehälter einen Schwimmerschalter aufweist, zur Erfassung eines Füllstandes. Bevorzugt ist dies eine "Voll-Meldung". Mit dieser Voll-Meldung kann entweder automatisch oder manuell der Trockenkompressor abgeschaltet werden, so daß eine weitere Befüllung dieses Sammelbehälters nicht mehr erfolgt. Sodann kann dieser Sammelbehälter in den bereits genannten weiteren größeren Sammelbehälter mit Hilfe des Kompressors entleert und sodann erneut an das zu entleerende System angeschlossen werden.

Eine alternative Ausgestaltung der Erfindung sieht vor, daß die Druckstation eine flexible Druckleitung aufweist, an deren freiem Ende ein Adapter zum Anschluß an eine Öffnung des Behälters vorgesehen ist. Diese Ausgestaltung dient der Druckentleerung des zu entleerenden Systems. Vorteilhafterweise kann jetzt der Entnahmeschlauch, falls gewünscht, direkt mit dem weiteren größeren Sammelbehälter verbunden werden, so daß der erste, kleinere Sammelbehälter entfallen kann.

Nach einer weiteren Ausgestaltung der Erfindung wird vorgeschlagen, daß die Druckleitung an ihren Enden über weitere Schlauchkupplungen mit den zu verbindenden Teilen verbindbar ist. Hierdurch ist es möglich, bereit gestellte Adapter für eine Vielzahl von zu entleerenden Behältern bzw. Leitungssystemen bereit zu halten und je nach Gebrauch auf die Druckleitung aufzustecken. Die Entleerungsvorrichtung wird dadurch anpassungsfähig an jeden zu entleerenden Behälter mit dem dazugehörenden Leitungssystem. Die andere Kupplungshälfte kann an die Druckstation angekuppelt werden. Vorteilhaftkönnen hierdurch bspw. unterschiedlich lange Druckleitungen bereit gehalten und je nach Bedarf angekuppelt werden. Auf der Entnahmeseite muß, um eine Vermischung unterschiedlicher Flüssigkeiten zu vermeiden, das Kupplungssystem an die Entnahmestelle angepaßt werden. Hierbei sind die flexiblen Leitungen auf der Entnahmeseite derart gestaltet, daß immer an beiden Enden die Kupplungsteile geändert werden, damit auch nur ein zugeordneter Sammelbehälter mit passendem Kupplungsteil anschließbar ist, so daß eine versehentliche Vermischung von Flüssigkeiten im Sammelbehälter vermieden wird.

Weiterhin wird nach einer Ausgestaltung der Erfindung vorgeschlagen, daß mindestens die dem Adapter zugeordnete Kupplungshälfte der Druckleitung im entkuppelten Zustand druckdicht geschlossen ist. Hierdurch wird zum einen ein einmal aufgebauter Druck auf der Druckleitung gehalten und zum anderen wird sichergestellt, daß keine Fremdstoffe in die Druckleitungen gelangen können. Der Leitungsdruck kann außerdem zum Abschalten des Kompressors verwendet werden.

Ferner wird nach einer Ausgestaltung der Erfindung vorgeschlagen, daß der Sammelbehälter einen nur mit der Schlauchkupplungshälfte des Entnahmeschlauchs verbindbaren Sammelbehältereinlaß aufweist. Hierdurch wird sichergestellt, daß auch nur die Schlauchkupplungshälfte der Entnahmeleitung auf den Sammelbehältereinlaß aufgesteckt werden kann und so keine ungewollten Stoffe, die die Flüssigkeit im Sammelbehälter verunreinigen können, aufgenommen werden.

Fernerhin wird nach einer Ausgestaltung der Erfindung vorgeschlagen, daß der Trockenkompressor elektrisch antreibbar ist. Hierdurch wird verhindert, daß Schmieroelspuren über die Druckluft in die Bremsflüssigkeit gelangen.

Darüberhinaus wird nach einer Ausgestaltung der Erfindung vorgeschlagen, daß die Druckstation zur Stromversorgung des Trockenkompressors eine Batterie aufweist. Hierdurch wird die Druckstation unabhängig von einem Stromnetz.

Ebenfalls nach einer Ausgestaltung der Erfindung wird vorgeschlagen, daß die Druckstation einen mit dem Trockenkompressor verbundenen Druckregler aufweist. Hierdurch kann ein für die Druckbeaufschlagung des zu entleerenden Behälters bzw. des damit verbundenen Leitungssystems verträglicher Druck eingestellt werden, so daß eine Beschädigung des zu entleerenden Behälters durch Überdruck vermieden wird.

Außerdem wird nach einer Ausgestaltung der Erfindung vorgeschlagen, daß die Druckstation ein mit dem Druckregler verbundenes Sicherheitsventil aufweist. Hierdurch wird zusätzlich der Aufbau eines Überdrucks vermieden auch für den Fall, daß der Druckregler ausfällt.

Nach einer anderen Ausgestaltung der Erfindung wird vorgeschlagen, daß der Sammelbehälter und die Druckstation auf einem Fahrgestell angeordnet sind. Hierdurch kann die Entleerungsvorrichtung sehr leicht von einem Ort zum anderen transportiert werden.

Schließlich wird nach einer Ausgestaltung der Erfindung noch vorgeschlagen, daß die Druckstation leicht lösbar am Fahrgestell angeordnet ist. Hierdurch können mehrere Sammelbehälter, die zum leichten Transport je auf einem Fahrgestell belassen werden, nacheinander von nur einer Druckstation bedient werden.

Die Erfindung soll nun anhand der beigefügten Zeichnungen näher erläutert werden. Es zeigen:
- Figur 1: perspektivisch dargestellt die Entleerungsvorrichtung mit dem Fahrgestell
- Figur 2: perspektivisch dargestellt einen Ausschnitt aus Figur 1
- Figur 3: perspektivisch dargestellt einen zu entleerenden Behälter
- Figur 4: schematisch dargestellt eine Druckstation
- Figur 5: Prinzipanordnung bei Vakuum-Entleerung
- Figur 6: Anordnung wie Fig. 5 bei Entleerung des ersten Sammelbehälters in einen größeren Sammelbehälter

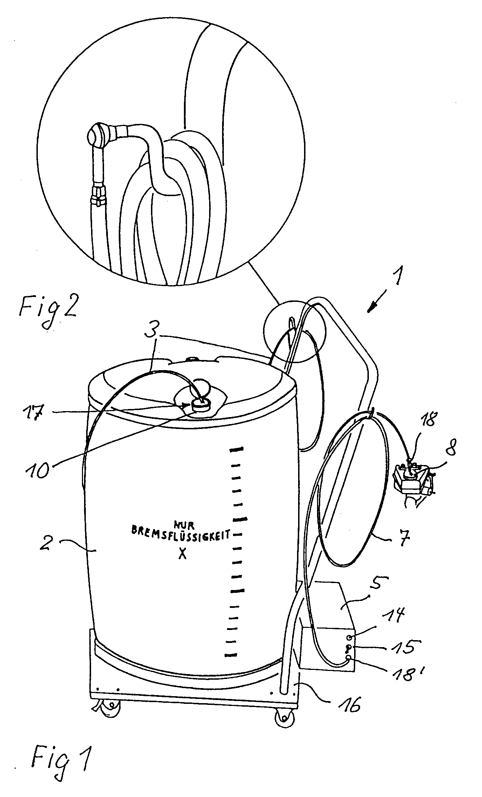

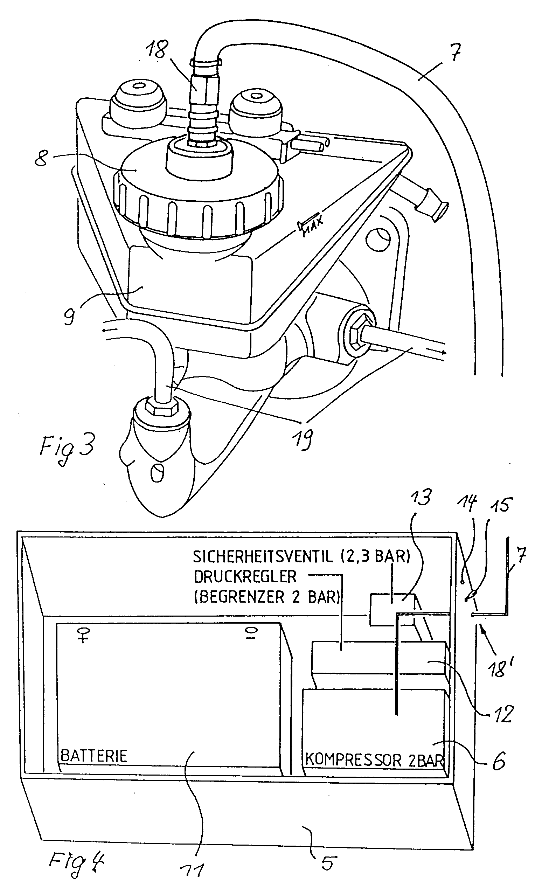

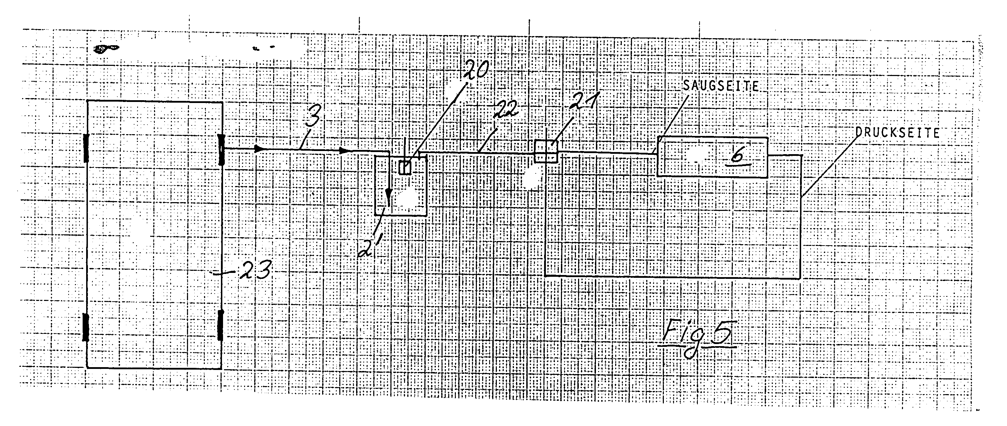

Figur 1 zeigt perspektivisch dargestellt eine Entleerungsvorrichtung 1 mit einem Sammelbehälter 2, der sich auf einem Fahrgestell 16 befindet. Eine Druckstation 5 ist seitlich leicht abnehmbar am Fahrgestell 16 angeordnet. Am Sammelbehälter 2 ist an einem Sammelbehältereinlaß 10 ein flexibler Entnahmeschlauch 3 angeordnet. An der Druckstation 5 ist eine flexible Druckleitung 7 angeordnet, an deren freiem Ende ein Adapter 8 angeschlossen ist. Der Sammelbehältereinlaß 10 ist nur mit einer Schlauchkupplungshälfte 17 des flexiblen Entnahmeschlauchs 3 verbindbar. An dem freien Ende des flexiblen Entnahmeschlauchs 3 befindet sich ein Anschlußstück 4, das mit einem nicht näher gezeigten Entleerungsanschluß eines Behälters mit einem Leitungssystem flüssigkeitsdicht verbunden werden kann. Die flexible Druckleitung 7 der in Figur 1 gezeigten Entleerungsvorrichtung weist weitere Schlauchkupplungen 18,18' auf, wovon eine Schlauchkupplung 18' die Verbindung mit der Druckstation und die andere Schlauchkupplung 18 die Verbindung mit dem Adapter herstellt. Soll die Flüssigkeit eines Behälters mit einem Leitungssystem, bspw. einem Bremssystem, mit der Entleerungsvorrichtung entleert werden, so wird zunächst das gezeigte Anschlußstück 4 auf einen nicht näher gezeigten Entleerungsanschluß, bspw. auf ein Entlüftungsventil eines Bremssystems, flüssigkeitsdicht aufgesetzt. Weiter wird ein passender Adapter 8 ausgewählt, der auf die Öffnung bspw. eines Behälters 9 eines Hauptbremszylinders, wie in Figur 3 gezeigt, aufgeschraubt werden kann. Nachdem der Adapter 8 auf den Behälter 9 aufgeschraubt wurde, wird er über die Schlauchkupplung 18 mit der Druckleitung verbunden. Über den in Figur 1 und 4 gezeigten Ein-Ausschalter 15 wird sodann der in der Druckstation 5 befindliche Kompressor 6 in Betrieb gesetzt. Hierdurch wird der in Figur 3 gezeigte Behälter 9 mit einem Druck beaufschlagt, wodurch die in dem Behälter 9 und dem Leitungssystem 19 befindliche Flüssigkeit in Richtung des nicht dargestellten und geöffneten Entleerungsanschlusses gedrückt wird. Über das mit dem Entleerungsanschluß verbundene Anschlußstück 4 und über den flexiblen Entnahmeschlauch 3 gelangt sodann die Flüssigkeit in den in Figur 1 gezeigten Sammelbehälter 2. Der Entnahmeschlauch kann hierbei an einer geeigneten Stelle mit einem durchsichtigen Einsatz ausgestattet sein, so daß auch visuell überwacht werden kann, ob noch zu entleerende Flüssigkeit fließt.

Um einen Überdruck zu vermeiden, der den zu entleerenden Behälter beschädigen oder zerstören kann, ist, wie in Figur 4 gezeigt, die Druckstation mit einem Druckregler 12 versehen. Aus Sicherheitsgründen ist dem Druckregler ein Sicherheitsventil 13 nachgeschaltet. Vorteilhafterweise ist mindestens die dem Adapter 8 zugeordnete Kupplungshälfte der Schlauchkupplung 18 der Druckleitung 7 im entkuppelten Zustand druckdicht geschlossen. Hierdurch kann die Druckleitung ohne Druckverlust vom Adapter 8 abgenommen und abgelegt werden oder auf einen nicht näher dargestellten weiteren Adapter bspw. zur Druckbeaufschlagung bzw. zur Entleerung des Kühlsystems angekuppelt werden. Die Druckstation braucht bei diesem Vorgang nicht von außen abgeschaltet werden, da ein nicht näher dargestellter Druckschalter dem Kompressor bei Erreichen des eingestellten Drucks, der in der Druckleitung bei der Entkopplung erhalten bleibt, abschaltet und bei Druckabfall wieder einschaltet. Die Betriebsbereitschaft wird dabei durch die in Figur 1 und 4 gezeigte Kontrollampe 14 angezeigt. Ein weiterer Vorteil besteht darin, daß die Druckstation 5 ( Figur 1) von dem Fahrgestell abgenommen werden und an irgend einem anderen Fahrgestell rasch, z.B. durch Einhängen, angebracht werden kann. Es können daher mehrere Entleerungsvorrichtungen ohne Druckstation von einer Druckstation nacheinander versorgt werden. Durch die in Figur 4 gezeigte Batterie 11 der Druckstation 5 kann der in ihr befindliche Kompressor 6 nicht nur leise und umweltfreundlich durch einen Elektromotor angetrieben werden, sondern macht die Druckstation darüberhinaus unabhängig von jedem Netzanschluß. Anstelle der in der Drucktation 5 vorgesehenen Batterie 11 kann natürlich auch z. B. die Kfz-Batterie des Bordnetzes verwendet werden. Es muß hierzu der Kompressor mit seinen elektrischen Leitungen lediglich an die Batterie des Bordnetzes angeklemmt werden.

Dadurch, daß der in Figur 1 gezeigte Sammelbehältereinlaß 10 nur mit der Schlauchkupplungshälfte 17 des Entnahmeschlauchs 3 verbindbar ist, wird sichergestellt, daß nur die Flüssigkeit aus dem zugeordneten zu entleerenden Behälter in den Sammelbehälter 2 eingefüllt werden kann.

Mit der Neuerung wird somit eine Entleerungsvorrichtung zur Entleerung eines eine Flüssigkeit aufweisenden Behälters mit einem Leitungssystem vorgeschlagen, welche die zu entleerende Flüssigkeit aus dem Behälter und dem Leitungssystem vollständig, schnell und sauber entleert und in einem dafür vorgesehenen Sammelbehälter sammelt. Vorteilhafterweise kann von dem Sammelbehälter durch einen speziellen Sammelbehältereinlaß nur eine bestimmte Flüssigkeit aufgenommen werden, so daß eine Verunreinigung oder ein Mischen mit anderen Flüssigkeiten vermeidbar ist. Die Entleerungsvorrichtung ist darüber hinaus portabel und dadurch, daß ihre Stromversorgung durch eine Batterie erfolgt, vom Stromnetz unabhängig.

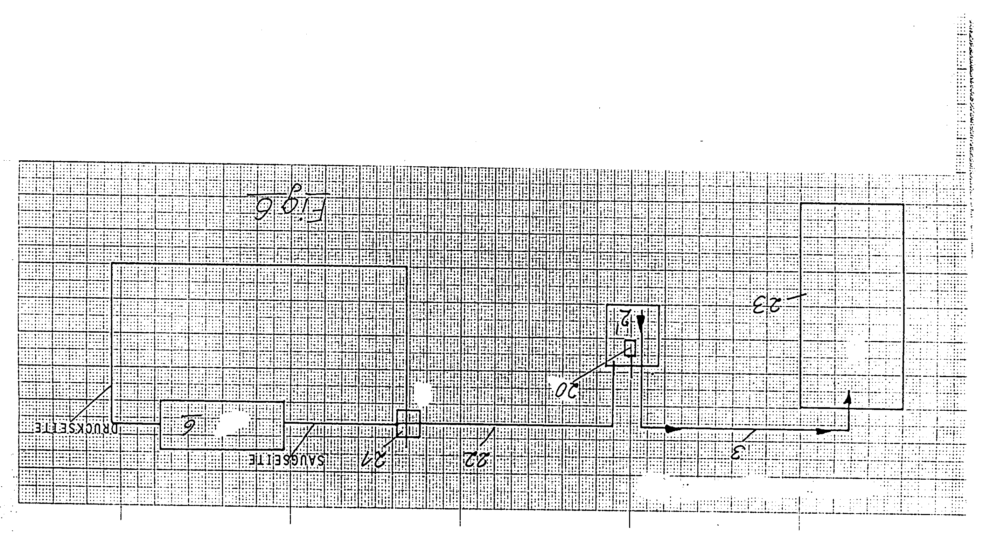

Gleiches gilt auch für eine Anordnung nach den Figuren 5 und 6. Die in den Figuren 5 und 6 gezeigte Anordnung ermöglicht eine Vakuum-Entleerung des zu entleerenden Behälters oder Systems. Der Trockenkompressor 6 ist sowohl mit seiner Saugseite als auch mit seiner Druckseite auf ein 4-Wege-Ventil 21 gelegt, das über eine weitere Leitung 22 mit einem kleineren Sammelbehälter 2' verbunden ist. Dieser kleinere Sammelbehälter 2' ist über einen Entnahmeschlauch 3, der bis zum Boden des Behälters geführt ist, mit einem nicht näher bezeichneten Entleerungsanschluß z.B. des Bremssystems eines Kraftfahrzeugs 23 verbindbar. Es kann dies die Anschlußsstelle z.B. an einem Bremszylinder sein. Für eine Entleerung des Bremssystems muß lediglich der Deckel des Behälters 9 einer solchen Bremsanlage geöffnet werden und es wird sodann die Saugseite des Trockenkompressors 6 über das 4-Wege-Ventil 21 und über die Leitung 22 mit dem Sammelbehälter 2' verbunden, so daß dieser einen entsprechenden Unterdruck aufweist. Hierzu ist der Sammelbehälter im übrigen entsprechend abgedichtet, so daß nicht

Umgebungsatmosphäre angesaugt werden kann. Der im Sammelbehälter 2' entstehende Unterdruck setzt sich über den Entnahmeschlauch 3 fort und saugt das Bremsleitungssystem und den Behälter 9 vollständig leer. Hier erfolgt also keine Druckentleerung, sondern eine Saugentleerung. Ein Schwimmerschalter 20 im Sammelbehälter 2' meldet einen gewünschten Füllstand. Dies kann z.B. die vollständige Füllung des Sammelbehälters 2 sein. Es kann dies eine optische Meldung sein, die den Beobachter veranlaßt, den Trockenkompressor 6 abzuschalten. Es kann hierdurch aber auch der Trockenkompressor 6 automatisch abgeschaltet werden. Dies kann so verriegelt sein, daß eine Wiedereinschaltung des Trockenkompressors 6 nur dann möglich ist, wenn das 4-Wege-Ventil 21 umgeschaltet ist.

Zur Entleerung des Sammelbehälters 2' wird der Entnahmeschlauch 3 mit dem Sammelbehältereinlaß 10 des großen Sammelbehälters 2 verbunden und es wird durch entsprechende Umschaltung des 4-Wege-Ventils 21 die Druckseite des Kompressors 6 über die Leitung 22 mit dem kleinen Sammelbehälter 2' verbunden. Der sich aufbauende Überdruck treibt die im kleinen Sammelbehälter 2' befindliche Flüssigkeit nunmehr über den Entnahmeschlauch 3 hinaus und in den großen Sammelbehälter 2 hinein. Hierzu weist der Entnahmeschlauch 3 an seinem von dem Sammelbehälter 2' abgewandten Ende eine entsprechende Kupplungshälfte auf, die mit der zuzuordnenden Schlauchkupplungshälfte 17 des großen Sammelbehälters 2 verbindbar ist.
Das gesamte System kann natürlich auch z.B. zur Entleerung von Kühlanlagen verwendet werden.

### Liste der verwendeten Bezugszeichen

- 1: Entleerungsvorrichtung
- 2,2': Sammelbehälter
- 3: Entnahmeschlauch
- 4: Anschlußstück
- 5: Druckstation
- 6: Trockenkompressor
- 7: Druckleitung
- 8: Adapter
- 9: Behälter
- 10: Sammelbehältereinlaß
- 11: Batterie
- 12: Druckregler
- 13: Sicherheitsventil
- 14: Kontrollampe
- 15: Ein-Ausschalter
- 16: Fahrgestell
- 17: Schlauchkupplungshälfte
- 18,18': weitere Schlauchkupplungen
- 19: Leitungssystem
- 20: Schwimmerschalter
- 21: 4-Wege-Ventil
- 22: Leitung
- 23: Kraftfahrzeug

## Patentansprüche

1. Entleerungsvorrichtung zur Entleerung eines eine Flüssigkeit aufweisenden Behälters (9) ggfls. mit einem damit verbundenen Leitungssystem mit mindestens einem Entleerungsanschluß, vorzugsweise zur Entleerung der Bremsflüssigkeit aus einem Bremssystem, gekennzeichnet durch eine Druckstation (5) mit einem Trockenkompressor (6) zur Erzeugung einer Druckdifferenz im zu entleerenden System sowie durch einen Sammelbehälter (2,2') mit einem flexiblen Entnahmeschlauch (3), an dessen freiem Ende ein Anschlußsstück (4) zur Verbindung mit dem Entleerungsanschluß des zu entleerenden Systems vorgesehen ist.

2. Entleerungsvorrichtung nach Anspruch 1, dadurch gekennzeichnet, daß ein Ende des Entnahmeschlauchs (3) eine Hälfte einer Schlauchkupplung (17) aufweist, deren zweite Hälfte am Sammelbehältereinlaß (10) vorgesehen ist, wobei erst nach dem Fügen der passenden Kupplungshälften ein Durchgang zum Sammelbehälter (2) offen ist.

3. Entleerungsvorrichtung nach Anspruch 1 oder 2, dadurch gekennzeichnet, daß der Sammelbehälter (2') über ein 4-Wege-Ventil mit dem Trockenkompressor (6) verbunden ist, derart, daß wahlweise die Saugseite oder Druckseite des Trockenkompressors (6) mit dem Sammelbehälter (2') verbindbar ist.

4. Entleerungsvorrichtung nach einem der Ansprüche 1 bis 3, dadurch gekennzeichnet, daß ein weiterer, größerer Sammelbehälter (2) vorgesehen ist, der mit dem Entnahmeschlauch (3) zur Entleerung des Sammelbehälters (2') mit diesem verbindbar ist.

5. Entleerungsvorrichtung nach einem der Ansprüche 1 bis 4, dadurch gekennzeichnet, daß der Sammelbehälter (2') einen Schwimmerschalter (20) aufweist, zur Erfassung eines Füllstandes.

6. Entleerungsvorrichtung nach Anspruch 1 oder 2, dadurch gekennzeichnet, daß die Druckstation (5) eine flexible Druckleitung (7) aufweist, an deren freiem Ende ein Adapter (8) zum Anschluß an eine Öffnung des Behälters (9) vorgesehen ist.

7. Entleerungsvorrichtung nach Anspruch 6, dadurch gekennzeichnet, daß die Druckleitung (7) an ihren Enden über weitere Schlauchkupplungen (18,18') mit den zu verbindenden Teilen verbindbar ist.

8. Entleerungsvorrichtung nach Anspruch 7, dadurch gekennzeichnet, daß mindestens die dem Adapter (8) zugeordnete Kupplungshälfte der Druckleitung (7) im entkuppelten Zustand druckdicht geschlossen ist.

9. Entleerungsvorrichtung nach einem der Ansprüche 4 bis 8, dadurch gekennzeichnet, daß der Sammelbehälter (2) einen nur mit der Schlauchkupplungshälfte (17) des Entnahmeschlauchs (3) verbindbaren Sammelbehältereinlaß (10) aufweist.

10. Entleerungsvorrichtung nach einem der Ansprüche 1 bis 9, dadurch gekennzeichnet, daß der Trockenkompressor (6) elektrisch antreibbar ist.

11. Entleerungsvorrichtung nach Anspruch 10, dadurch gekennzeichnet, daß die Druckstation (5) zur Stromversorgung des Trockenkompressors (6) eine Batterie (11) aufweist.

12. Entleerungsvorrichtung nach einem der Ansprüche 1 bis 11, dadurch gekennzeichnet, daß die Druckstation (5) einen mit dem Trockenkompressor (6) verbundenen Druckregler (12) aufweist.

13. Entleerungsvorrichtung nach Anspruch 12, dadurch gekennzeichnet, daß die Druckstation (5) ein mit dem Druckregler (12) verbundenes Sicherheitsventil (13) aufweist.

14. Entleerungsvorrichtung nach einem der Ansprüche 1 bis 9, dadurch gekennzeichnet, daß der Sammelbehälter (2) und die Druckstation (5) auf einem Fahrgestell (16) angeordnet sind.

15. Entleerungsvorrichtung nach Anspruch 14, dadurch gekennzeichnet, daß die Druckstation (5) leicht lösbar am Fahrgestell (16) angeordnet ist.
